# EUROPEAN PATENT SPECIFICATION

(11) **EP 3 470 462 B1**
(45) Date of publication and mention of the grant of the patent: **08.10.2025**
(21) Application number: 18182652.0
(22) Date of filing: 10.07.2018
(51) Int. Cl.: C08L 23/12

(54) **POLYPROPYLENE FOR INSULATION LAYER OF POWER CABLE**
POLYPROPYLEN FÜR ISOLATIONSSCHICHT VON STROMKABEL
POLYPROPYLÈNE POUR COUCHE D'ISOLATION DE CÂBLE D'ALIMENTATION

(30) Priority: 11.10.2017 KR 20170129829
(43) Date of publication of application: 17.04.2019
(73) Proprietor: Hanwha TotalEnergies Petrochemical Co., Ltd., Seosan-si, Chungcheongnam-do (KR)
(72) Inventor: KIM, Bong Seock, 31900 Chungcheongnam-do (KR); CHUN, Yong Sung, 31900 Chungcheongnam-do (KR); LEE, Eun Woong, 31900 Chungcheongnam-do (KR)
(74) Representative: Pföstl, Andreas

(56) References cited:
- EP-A2- 0 690 458
- JP-A- S60 157 112
- US-A1- 2006 293 462
- US-A1- 2007 125 898
- US-A1- 2016 152 807

## Description

### CROSS-REFERENCE TO RELATED APPLICATION

### BACKGROUND

### 1. Field

The present invention relates to polypropylene for an insulation layer of an electric power cable. More particularly, the present invention relates to non-crosslinked polypropylene having excellent mechanical properties and recyclability, and more particularly to, polypropylene resin for an electrical power cable insulator having excellent flexibility, heat distortion and low-temperature impact resistance and a high insulation breakdown strength to be suitably used for an insulation layer of an electrical power cable.

### 2. Description of the Related Art

A general electrical power cable including an insulation layer usually made of polyethylene or ethylene-propylene rubber (EPR), ethylene-propylene-dien rubber (EPDM) copolymer, etc. in the crosslinked form to maintain mechanical and electrical properties at high temperature in the range from 90°C to 110°C, which is an operating temperature range of a high-voltage cable. However, a bad product or a product reaching the end of its life, which is made of a crosslinked polymer, such as crosslinked polyethylene (XLPE), is not readily recyclable, so that it cannot be disposed of by incineration, suggesting that it is not an environmentally friendly material. Non-crosslinked high density polyethylene (HDPE), linear low density polyethylene (LLDPE), or low density polyethylene (LDPE), which is recyclable but has poor heat resistance, so that it may be deformed and melted at high temperature, making it difficult to be suitably used for the high-voltage cable operating at high temperature.

Since polypropylene has a melting temperature of 130 °C or higher to provide better heat resistance than polyethylene and can increase the operating temperature of an electrical power cable to 110 °C , intensive researches into non-crosslinked, recyclable polypropylene have been conducted in recent years. Korean Patent Publication No. 10-2014-0102407 discloses an insulation layer for an electrical power cable having an improved insulating property and recyclability by addition of an insulation fluid to polypropylene. Korean Patent Publication No. 10-2014-0053204 discloses an electrical power cable using polypropylene resin with an organic nucleating agent added to reduce crystal sizes as an insulation layer. However, the disclosed electrical power cable includes rubber additionally kneaded to overcome reduced flexibility due to high stiffness of polypropylene, which may lower some physical properties. In addition, the organic nucleating agent added to reduce crystal sizes may cause a cost increase and incidental shortcomings. Accordingly, in order to make polypropylene useful in an insulation layer of an electrical power cable, there is a need for improved polypropylene. US 2016/152807 discloses compositions for cables having a sufficiently low flexural modulus (for ease of installation) and acceptably high alternating current (AC) breakdown strength.

### SUMMARY

Embodiments of the present invention provide a polypropylene resin, specifically, an ethylene-propylene impact copolymer suitable for an electric power cable insulator, which has excellent flexibility, heat distortion and low-temperature impact resistance and a high insulation breakdown strength to be suitably used for an insulation layer of an electrical power cable.

According to an aspect of the present invention, there is provided a polypropylene resin comprising an ethylene-propylene impact copolymer consisting of a propylene homopolymer or an ethylene-propylene random copolymer (a), and ethylene-propylene copolymer rubber (b) polymerized therein, wherein the ethylene-propylene impact copolymer has a melting temperature (Tm) in a range of 145°C to 170 °C, the content of a rubber component, measured by the content of a solvent extract (xylene solubles, room temperature) in the ethylene-propylene impact copolymer, is in a range of 35 wt% to 55 wt%, and the rubber component has two glass transition temperatures (Tg) in ranges of -25°C to -35°C and -45°C to -55°C and, wherein the ethylene-propylene copolymer rubber has 20 to 45 wt% ethylene content.

According to another aspect of the present invention, there is provided an electrical power cable manufactured using the polypropylene resin.

As described above, since the polypropylene resin according to the present invention has excellent flexibility, heat distortion and low-temperature impact resistance and a high insulation breakdown strength, it can be suitably used for an insulation layer of an electrical power cable. In addition, since the polypropylene resin according to the present invention is not crosslinked, it can be recycled to offer an environmentally friendly alternative to the existing polypropylene resin.

### BRIEF DESCRIPTION OF DRAWING

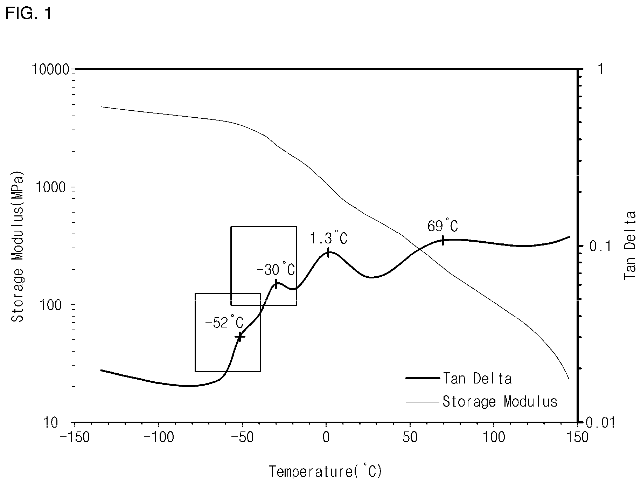

FIG. 1 is a graph illustrating glass transition temperature (Tg) data of a rubber component of a polypropylene resin prepared in Example 2, as measured using a dynamic mechanical analyzer (DMA).

### DETAILED DESCRIPTION

According to the present invention, there is provided a polypropylene resin comprising an ethylene-propylene impact copolymer consisting of a propylene homopolymer or an ethylene-propylene random copolymer (a), and ethylene-propylene copolymer rubber (b) polymerized therein, wherein the ethylene-propylene impact copolymer has a melting temperature (Tm) in the range of 145°C to 170 °C, the content of a rubber component, measured by the content of a solvent extract (xylene solubles, room temperature) in the ethylene-propylene impact copolymer, is in a range of 35 wt% to 55 wt%, and the rubber component has two glass transition temperatures (Tg) in ranges of -25 °C to -35 °C and -45 °C to -55 °C wherein the ethylene-propylene copolymer rubber has 20 to 45 wt% ethylene content.

The ethylene-propylene impact copolymer is preferably prepared by polymerizing a propylene homopolymer or an ethylene-propylene random copolymer (a), and ethylene-propylene copolymer rubber (b), step by step in reactors to then be kneaded.

In the polypropylene resin according to the present invention, the propylene homopolymer or the ethylene-propylene random copolymer (a) may be polymerized by injecting propylene alone or in combination with ethylene into a polymerization reactor.

A method of preparing the propylene homopolymer or the ethylene-propylene random copolymer (a) is not particularly limited but is preferably a general method publicly known in the related art.

In the polypropylene resin according to the present invention, after polymerizing the propylene homopolymer or the ethylene-propylene random copolymer (a), the ethylene-propylene copolymer rubber (b) is preferably polymerized in a subsequent polymerization reactor in the presence of the propylene homopolymer or the ethylene-propylene random copolymer (a), and a method of polymerizing the ethylene-propylene copolymer rubber (b) is not particularly limited but is preferably a general method publicly known in the related art.

The polypropylene resin according to the present invention includes an ethylene-propylene impact copolymer, which has a melting temperature (Tm) in a range of 145 °C to 170 °C, preferably in a range of 150 °C to 165 °C.

If the melting temperature (Tm) is lower than 145°C, heat resistance is not sufficiently high, so that a heat distortion ratio after pressure loading at high temperature is high, making the polypropylene resin unsuitable for a high-voltage electrical power cable operating at high temperature. Meanwhile, the polypropylene having a melting temperature (Tm) exceeding 170 °C cannot be polymerized on a commercial basis.

The content of a rubber component, measured by the content of a solvent extract (xylene solubles, room temperature) in the ethylene-propylene impact copolymer, is in a range of 35 wt% to 55 wt%, preferably in a range of 38 wt% to 50 wt.

The rubber component as a solvent extract may be represented as a percentage based on the total weight of the polypropylene resin, the content of the solvent extract being obtained in such a manner that the polypropylene resin is dissolved in xylene by 1 wt% at 140 °C for one hour, extracted after the lapse of two hours at room temperature and weighed the solvent extract by the weight of xylene solubles.

If the rubber content is less than 35 wt%, the flexibility is insufficient and low-temperature impact resistance is poor. If the rubber content is greater than 55 wt%, a heat distortion rate is high, making the polypropylene resin unsuitable for a high-voltage electrical power cable operating at high temperature.

As shown in FIG. 1, a rubber component of the ethylene-propylene impact copolymer has two glass transition temperatures (Tg) in ranges of -25°C to -35°C and - 45 °C to -55 °C, as measured using a dynamic mechanical analyzer (DMA). If only one glass transition temperature (Tg) appears in the range of -25 °C to -35 °C, the ethylene-propylene impact copolymer may have a weak performance of low-temperature impact resistance at a temperature lower than the glass transition temperature (Tg). However, if there exits only one glass transition temperature (Tg) in the range of -45 °C to -55 °C, the low-temperature impact resistance of the ethylene-propylene impact copolymer is good but the heat distortion thereof may deteriorate due to a sharply decreasing stiffness as the increasing ΔT (Experimental temperature-Glass transition temperature) for non-crosslinked rubber.

In the polypropylene resin according to the present invention, the ethylene-propylene copolymer rubber has a 20 to 45 wt% ethylene content, preferably a 30 to 40 wt% ethylene content.

If the ethylene content is out of the range of 20 to 45 wt%, ethylene based copolymerization or propylene based copolymerization is preferentially performed, so that only one glass transition temperature (Tg) is demonstrated in the range of-25 °C to - 35 °C or -45 °C to -55 °C.

Therefore, the low-temperature impact resistance of the polypropylene resin may be lowered or the heat distortion property may be poor, which is not desirable.

In the polypropylene resin according to the present invention, the rubber component as a solvent extract preferably has an intrinsic viscosity of 1.5 to 3.5 dl/g, as measured in Decaline at 135°C.

As the ΔT of the rubber component increases, the stiffness thereof becomes decreased. However, if the rubber component has a small molecular weight, the stiffness of the rubber component is sharply reduced. Thus, if the intrinsic viscosity is less than 1.5 dl/g, the heat distortion becomes undesirably deteriorated. If the intrinsic viscosity is greater than 3.5 dl/g, the rubber component may agglomerate, and dispersed rubber particle sizes may increase to cause bending whitening, giving poor appearance.

In the polypropylene resin according to the present invention, the ethylene-propylene impact copolymer preferably has a melt index of 0.3 to 7.0 g/10 min, as measured by ASTM D1238 at 230 °C with a 2.16 kg load.

If the melt index is less than 0.3 g/10 min, the load may increase during extrusion, lowering the productivity, and if the melting index is greater than 7.0 g/10 min, sagging may occur during extrusion, undesirably lowering thickness uniformity.

The polypropylene resin according to the present invention may further include one or more additives selected from an antioxidant and a neutralizer.

The present invention may also provide an electrical power cable manufactured using the polypropylene resin, and the electrical power cable can be advantageously employed to an insulation layer.

### Examples 1-3 and Comparative Examples 1-5

Ethylene-propylene impact copolymers prepared in Examples of the present invention and Comparative Examples were prepared using a Mitsui's Hypol process for preparing polypropylene, in which two bulk reactors and two gas phase reactors are serially connected and can perform continuous polymerization processes. A Ziegler-Natta catalyst having a phthalate based internal donor was used. triethylaluminum was used as a co-catalyst and dicyclopentyldimethoxy silane was used as a donor. The operating temperatures and pressures of first and second stage reactors, which are bulk reactors, were 68 to 75°C and 30 to 40 kg/cm² and 68 to 75 °C and 25 to 35 kg/cm², respectively. The operating temperatures and pressures of third and fourth stage reactors, which are gas phase reactors, were 75 to 82°C and 15 to 20 kg/cm² and 68 to 75°C and 10 to 17 kg/cm², respectively. Propylene was injected alone into the first, second and third stage reactors to generate propylene homopolymers, or ethylene was additionally injected into the first, second and third stage reactors to generate ethylene-propylene random copolymers. During polymerization of ethylene-propylene random copolymers, the respective polymerization reactors were allowed to copolymerize equivalent amounts of ethylenes. For copolymerization of ethylenes having compositions listed in Table 1, ethylene-propylene ratios were adjusted. Ethylene and propylene were injected into serially arranged four-stage reactors for polymerization of ethylene-propylene copolymer rubber, thereby finally obtaining ethylene-propylene impact copolymers. The melting index was controlled by injecting hydrogen into each reactor. Polymerization was performed on the component (a) and (b) compositions listed in Tables 1 and 2 using the above-described method and polymerization ratios of ethylene-propylene rubber polymers were adjusted according to the solvent extract content.

### Comparative Example 6

Crosslinked polyethylene, which is commercially available from Hanwha Chemical Corp., Korea, for use in an electrical power cable in the trade name of CLNB-8141S, was used.

In Examples and Comparative Examples, various physical properties were evaluated in the following manners and standards.
**(1) Melt Index:** The melt index was measured in accordance with ASTM D 1238, 230 °C, 2.16 kg load conditions.
**(2) Solvent extract content (Xylene soluble):** Polypropylene resin was dissolved in xylene by 1wt% at 140 °C for one hour, extracted at room temperature after the lapse of two hours, and then weighed, and the weight of xylene soluble was represented as a percentage based on the total weight of the polypropylene resin.
**(3) Intrinsic viscosity of solvent extract:** The intrinsic viscosity of the solvent extract was measured using a viscometer in a Decaline solution at 135°C.
**(4) Melting temperature (Tm):** Samples were isothermally maintained at 200 °C for 10 minutes using a differential scanning calorimeter (DSC) to remove thermal history, cooled by 10 °C per minute from 200 °C to 30 °C for crystallization to give the same thermal history to the samples and then isothermally maintained again at 30 °C for 10 minutes, and the temperature of each sample was elevated again by 10 °C per minute to obtain the melting temperature (Tm) from a peak melting temperature.
**(5) Glass transition temperature (Tg):** The glass transition temperature (Tg) of the rubber component was obtained from the relaxation curve while elevating the temperature at a rate of 2 °C/min from -140 °C to 145°C using a dynamic mechanical analyzer (DMA). FIG. 1 shows that the glass transition temperatures (Tg) of -30 °C and -52 °C are identified at a temperature of 0 °C or less based on the DMA relaxation curve for the polypropylene resin of Example 2.
**(6) Flexural modulus (FM):** The flexural modulus was measured in accordance with the ASTM D 790 method.
**(7) Low-temperature impact resistance:** Test pieces each having a length 38 mm, a width of 6 mm and a thickness of 2 mm were injected at an injection temperature of 240 °C, and low-temperature impact resistance tests were carried out on 5 test pieces at -40 °C in accordance with the KS C 3004 method and the number of broken test pieces was obtained.
**(8) Heat distortion(Pressure test at high temperature):** Test pieces each having a length 30 mm, a width of 15 mm and a thickness of 2 mm were injected at an injection temperature of 240 °C, and heat distortion tests were carried out by applying 1.6 kg loads at 130 °C for 6 hours in accordance with the KS C IEC 60811-508 method. Then, the heat distortion ratio was obtained by dividing the distorted thickness by the initial thickness of each test piece.
**(9) Bending whitening:** Test pieces were bent at 90° and the extent of whitening occurrences was identified by naked eye. (○: Excellent, △: Good, ×: Bad)
**(10) AC breakdown voltage:** Polypropylene test pieces were prepared by fabricating 200 *µ*m thick sheets using a laboratory extruder (HAAKE extruder), and crosslinked polyethylene (XLPE) test pieces were prepared by press-molding the test pieces at 180 °C to have a thickness of 200 *µ*m. AC breakdown voltages were measured using sphere electrodes each having a diameter of 12.7 mm in accordance with the ASTM D 149-92 method at room temperature.

**Table 1**

| | | | Example | | |
|---|---|---|---|---|---|
| | | | 1 | 2 | 3 |
| Resin property | Melt index, g/10 min | | 0.5 | 2.5 | 5.0 |
| | Component (a) composition | Propylene content, wt% | 100 | 98.5 | 100 |
| | | Ethylene content, wt% | 0 | 1.5 | 0 |
| | Component (b) composition | Propylene content, wt% | 60 | 70 | 70 |
| | | Ethylene content, wt% | 40 | 30 | 30 |
| | Solvent extract content, wt% | | 50 | 38 | 45 |
| | Intrinsic viscosity of solvent extract, dl/g | | 2.5 | 3.2 | 1.9 |
| | Thermal behavior | Melting temperature (Tm), °C | 164 | 152 | 163 |
| | | Glass transition temperature #1 (Tg), °C | -28 | -30 | -33 |
| | | Glass transition temperature #2 (Tg), °C | -52 | -52 | -48 |
| Physical property | Flexural modulus, Kg/cm² | | 3,000 | 4,500 | 4,300 |
| | Low-temperature impact resistance, ea | | 0 | 0 | 0 |
| | Heat distortion, % | | 32 | 24 | 12 |
| | Bending whitening | | O | O | O |

**Table 2**

| | | | Comparative Example | | | | |
|---|---|---|---|---|---|---|---|
| | | | 1 | 2 | 3 | 4 | 5 |
| Resin property | Melt index, g/10 min | | 3.0 | 1.5 | 2.5 | 4.3 | 3.7 |
| | Component (a) composition | Propylene content, wt% | 100 | 100 | 97 | 100 | 100 |
| | | Ethylene content, wt% | 0 | 0 | 3 | 0 | 0 |
| | Component (b) Composition | Propylene content, wt% | 82 | 55 | 70 | 65 | 70 |
| | | Ethylene content wt% | 18 | 45 | 30 | 35 | 30 |
| | Solvent extract content, wt% | | 40 | 50 | 45 | 60 | 15 |
| | Intrinsic viscosity of solvent extract, dl/g | | 2.0 | 1.9 | 2.5 | 1.2 | 4.0 |
| | Thermal Behavior | Melting temperature (Tm), °C | 164 | 164 | 142 | 163 | 163 |
| | | Glass transition temperature #1 (Tg), °C | -30 | - | -30 | -31 | -30 |
| | | Glass transition temperature #2 (Tg), °C | - | -51 | -50 | -50 | -51 |
| Physical property | Flexural modulus, Kg/cm² | | 5,000 | 3,600 | 2,500 | 2,400 | 9,000 |
| | Low-temperature impact resistance, ea | | 4 | 0 | 0 | 0 | 5 |
| | Heat distortion, % | | 20 | 40 | 60 | 50 | 7 |
| | Bending whitening | | ○ | Δ | ○ | ○ | X |

Tables 1 and 2 show physical properties of the resins prepared in Examples and Comparative Examples.

In Examples 1 to 3, the polypropylene resin according to the present invention had a low flexural modulus, which indicates flexibility, and demonstrated excellent properties in low-temperature impact resistance, heat distortion and bending whitening.

In Comparative Examples 1 and 2, the glass transition temperatures (Tg) were exhibited as single peaks at -30 °C and -51 °C, suggesting that the low-temperature impact resistance, the heat distortion and the bending whitening properties were undesirably poor.

In Comparative Examples 3 and 4, excellent flexibility and low-temperature impact resistance were demonstrated. However, the resin of Comparative Example 3 had a low melting temperature, and the resin of Comparative Example 4 including the rubber component had the solvent extract content and intrinsic viscosity deviating from the range of the present invention, suggesting that the heat distortion property was poor.

In Comparative Example 5, the solvent extract content of the rubber component was low, demonstrating poor flexibility and low-temperature impact resistance. In addition, the intrinsic viscosity of the solvent extract was high, demonstrating a bad bending whitening property.

**Table 3**

| | Example 2 | Comparative Example 6 |
|---|---|---|
| Resin type | Polypropylene | Crosslinked polyethylene |
| AC breakdown voltage (kV) | 65 | 64 |

Table 3 indicates comparison results of AC breakdown voltages of the polypropylene according to the present invention and the crosslinked polyethylene of Comparative Example 6 (CLNB-8141S) commercially available from Hanwha Chemical Corp. As indicated in Table 3, the polypropylene according to the present invention was better in the AC breakdown voltage than the existing crosslinked polyethylene currently being used for an electrical power cable.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A polypropylene resin comprising an ethylene-propylene impact copolymer consisting of a propylene homopolymer or an ethylene-propylene random copolymer (a), and ethylene-propylene copolymer rubber (b) polymerized therein,
wherein the ethylene-propylene impact copolymer has a melting temperature (Tm) in a range of 145°C to 170 °C, the content of a rubber component, measured by the content of a solvent extract (xylene solubles, room temperature) in the ethylene-propylene impact copolymer, is in a range of 35 wt% to 55 wt%, and the rubber component has two glass transition temperatures (Tg) in ranges of -25 °C to -35°C and - 45 °C to -55 °C and,
wherein the ethylene-propylene copolymer rubber has 20 to 45 wt% ethylene content.

2. The polypropylene resin of claim 1, wherein the rubber component has an intrinsic viscosity of 1.5 to 3.5 dl/g, as measured in Decaline at 135°C.

3. The polypropylene resin of claim 1, wherein the ethylene-propylene impact copolymer has a melting index of 0.3 to 7.0g/10 min, as measured in accordance with ASTM D1238 at 230 °C with a 2.16 kg load.

4. The polypropylene resin of claim 1, further comprising one or more additives selected from an antioxidant and a neutralizer.

5. An electrical power cable manufactured using the polypropylene resin of one of claims 1 to 4.

6. The electrical power cable of claim 5, wherein the electrical power cable is used for an insulation layer.

## Patentansprüche

1. Polypropylenharz, umfassend ein Ethylen-Propylen-Schlagzäh-Copolymer, bestehend aus einem Propylen-Homopolymer oder einem statistischen Ethylen-Propylen-Copolymer (a), und einen darin polymerisierten Ethylen-Propylen-Copolymer-Kautschuk (b),
wobei das Ethylen-Propylen-Schlagzäh-Copolymer eine Schmelztemperatur (Tm) in einem Bereich von 145°C bis 170 °C aufweist, der Gehalt einer Kautschukkomponente, gemessen durch den Gehalt eines Lösungsmittelextrakts (in Xylol lösliche Stoffe, Raumtemperatur) in dem Ethylen-Propylen-Schlagzäh-Copolymer, in einem Bereich von 35 Gew.-% bis 55 Gew.-% liegt und die Kautschukkomponente zwei Glasübergangstemperaturen (Tg) in Bereichen von -25 °C bis -35 °C und -45 °C bis - 55 °C aufweist und,
wobei der Ethylen-Propylen-Copolymer-Kautschuk einen Ethylengehalt von 20 bis 45 Gew.-% aufweist.

2. Polypropylenharz nach Anspruch 1, wobei die Kautschukkomponente eine intrinsische Viskosität von 1,5 bis 3,5 dl/g, gemessen in Decalin bei 135 °C , aufweist.

3. Polypropylenharz nach Anspruch 1, wobei das Ethylen-Propylen-Schlagzäh-Copolymer einen Schmelzindex von 0,3 bis 7,0 g/10 min aufweist, gemessen gemäß ASTM D1238 bei 230 °C mit einer Last von 2,16 kg.

4. Polypropylenharz nach Anspruch 1, das ferner ein oder mehrere Additive, ausgewählt aus einem Antioxidationsmittel und einem Neutralisationsmittel, enthält.

5. Elektrisches Stromkabel, hergestellt unter Verwendung des Polypropylenharzes nach einem der Ansprüche 1 bis 4.

6. Elektrisches Stromkabel nach Anspruch 5, wobei das elektrische Stromkabel für eine Isolierschicht verwendet wird.

## Revendications

1. Résine de polypropylène comprenant un copolymère choc éthylène-propylène composé d'un homopolymère de propylène ou d'un copolymère aléatoire éthylène-propylène (a), et un caoutchouc copolymère éthylène-propylène (b) polymérisé dans celle-ci,
dans laquelle le copolymère choc éthylène-propylène présente une température de fusion (Tm) dans une plage de 145 °C à 170 °C, la teneur en composant caoutchouc, mesurée par la teneur en extrait de solvant (solubles dans le xylène, température ambiante) dans le copolymère choc éthylène-propylène, est dans une plage de 35 % à 55 % en poids, et le composant caoutchouc présente deux températures de transition vitreuse (Tg) dans des plages de -25 °C à -35 °C et de -45 °C à -55 °C, et
dans laquelle le caoutchouc copolymère éthylène-propylène présente une teneur en éthylène de 20 à 45 % en poids.

2. Résine de polypropylène selon la revendication 1, dans laquelle le composant caoutchouc présente une viscosité intrinsèque de 1,5 à 3,5 dl/g, mesurée dans la décaline à 135 °C.

3. Résine de polypropylène selon la revendication 1, dans laquelle le copolymère choc éthylène-propylène présente un indice de fusion de 0,3 à 7,0 g/10 minutes, mesuré conformément à la norme ASTM D1238 à 230 °C avec une charge de 2,16 kg.

4. Résine de polypropylène selon la revendication 1, comprenant en outre un ou plusieurs additifs choisis parmi un antioxydant et un neutralisant.

5. Câble d'alimentation électrique fabriqué en utilisant la résine de polypropylène selon l'une des revendications 1 à 4.

6. Câble d'alimentation électrique selon la revendication 5, dans lequel le câble d'alimentation électrique est utilisé pour une couche d'isolation.
